# EUROPÄISCHE PATENTSCHRIFT

(11) **EP 0 503 280 B1**
(45) Veröffentlichungstag und Bekanntmachung des Hinweises auf die Patenterteilung: **22.03.1995**
(21) Anmeldenummer: 92102126.7
(22) Anmeldetag: 08.02.1992
(51) Int. Cl.: G01F 17/00, G01F 23/14

(54) **Vorrichtung zum Messen des Anteils flüssigen Brennstoffs in einem Tank**
Device to measure the fuel content in a tank
Dispositif pour mesurer la teneur en carburant dans un réservoir

(30) Priorität: 11.03.1991 DE 4107787; 27.06.1991 DE 4121185
(43) Veröffentlichungstag der Anmeldung: 16.09.1992
(73) Patentinhaber: PIERBURG GMBH, 41460 Neuss (DE)
(72) Erfinder: Härtel, Günter, W-4040 Neuss 21 (DE); Lösing, Karl-Heinrich, Dr.-Ing., W-4234 Alpen (DE); Schürfeld, Armin, W-4005 Meerbusch 2 (DE); Kerkmann, Harald, W-4000 Düsseldorf 1 (DE); Blasczyk, Johann, W-4040 Neuss 21 (DE)

(56) Entgegenhaltungen:
- DE-A- 3 913 096
- GB-A- 2 060 911

## Beschreibung

Die Erfindung betrifft eine Vorrichtung zum Messen des Anteils flüssigen Brennstoffs in einem Tank nach dem Oberbegriff des Patentanspruchs 1.

Eine derartige Vorrichtung ist Gegenstand der DE-PS 697 341 und weist bereits das Prinzip auf, aus einer Kolbenverstellung und der dadurch verursachten Druckänderung im gasgefüllten Tankraum auf den Anteil flüssigen Brennstoffs zu schließen. Bei dieser Vorrichtung wird der Kolben durch Handbetätigung gegen die Kraftwirkung einer Feder in eine definierte Stellung gebracht, aus der er beim Messen durch die Federkraft verstellt wird.

Aus der DE-C2 29 53 903 ist eine ähnliche Vorrichtung bekannt, bei der der Kolben aus einer definierten Stellung beim Messen durch einen Luftmotor verstellt wird, der mit unter- oder überatmospährischem Druck arbeitet. Diese Vorrichtung weist Drucksensoren und Wegsensoren auf, deren Signale ggf. auch einem elektronischen Steuergerät zur Weiterverarbeitung zugeführt werden können.

Die Vorrichtung mit Handverstellung des Kolbens ist nicht mehr zeitgemäß, die Kolbenverstellung mittels Luftmotor ist bauraumaufwendig und die Vorrichtung nur am gasgefüllten Tankraum anschließbar, weswegen eine Anwendung bisher nicht erfolgte.

Hiervon ausgehend liegt der Erfindung daher die Aufgabe zugrunde, eine Vorrichtung der angegebenen Art zu gestalten, die ohne bisher übliche Antriebsmittel wie Hand- oder Luftantrieb, die insgesamt einen hohen Aufwand für Schaltventile, Anschlußleitungen usw. erfordern, arbeitet, einen geringen Bauraumbedarf hat und beliebig am Brennstofftank anschließbar ist.

Diese Aufgabe ist durch die im Patentanspruch 1 gekennzeichneten Merkmale gelöst worden. Vorteilhafte Weiterbildungen sind in den Unteransprüchen angegeben.

Ausführungsbeispiele der Erfindung sind in der Zeichnung dargestellt und werden nachfolgend mit Angabe erreichbarer Vorteile beschrieben.
Die Zeichnung zeigt:
**Fig. 1** eine erfindungsgemäße Vorrichtung an einem Brennstofftank eines Kraftfahrzeuges;
**Fig. 2** eine Einzelheit aus Fig. 1;
**Fig. 3 und 4** alternative Ausbildungen der Einzelheit nach Fig. 2,
**Fig. 5** eine Einzelheit aus Fig. 1 in einer ausgestaltenden Ausbildung.

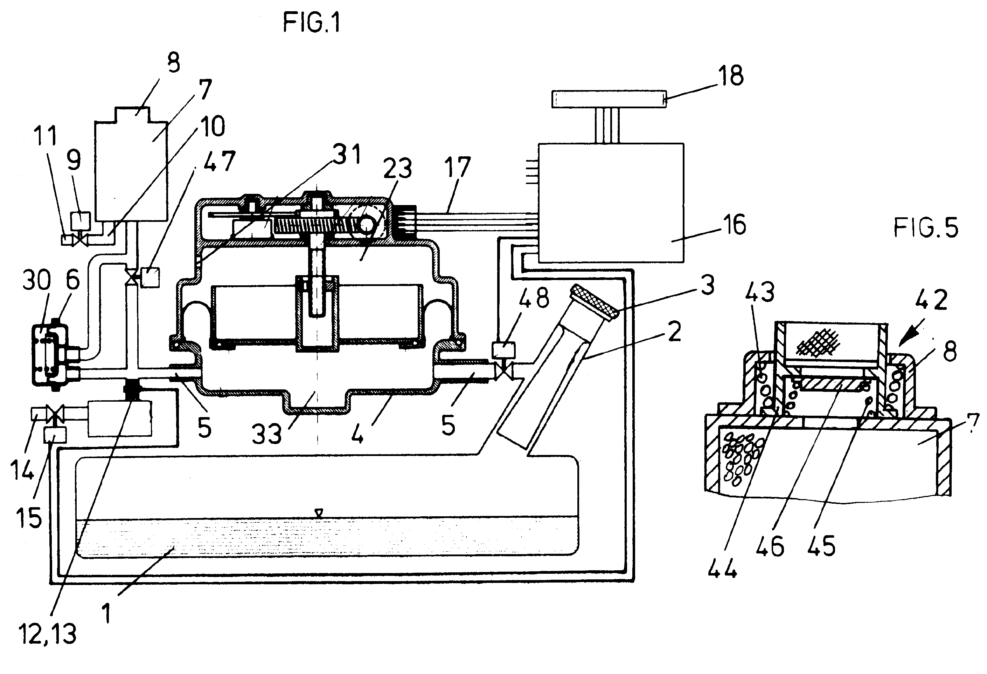

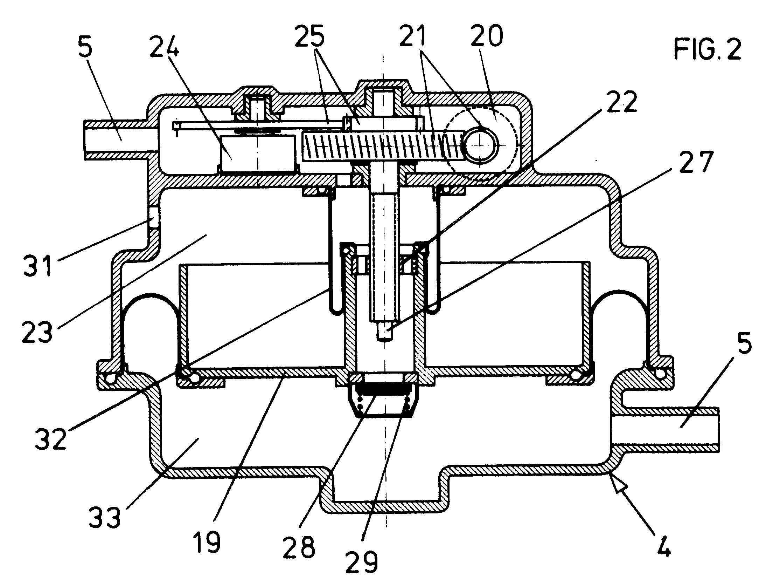

Fig. 1 zeigt einen Brennstofftank 1 mit einem Tankeinfüllstutzen 2 und einem Tankverschlußdeckel 3 sowie einem über dem oberen Tankboden angeordneten Zylinder 4. Der Zylinder 4 ist in Fig. 2, 3 und 4 in geringfügig abgewandelten Ausführungen vergrößert dargestellt. Der Brennstofftank 1 ist mit einer Tankentlüftungsleitung 5 ausgestattet, die vom Tankeinfüllstutzen 2 über ein Druckbegrenzungsventil 6 in einen Aktivkohlebehälter 7 mit einer Verbindung zur Atmosphäre über einen Anschluß 8 führt. Zur Regenerierung des Aktivkohlebehälters 7 dient ein Taktventil 9, welches in Abhängigkeit von den Betriebsbedingungen einer Brennkraftmaschine über einen Anschluß 10 und eine Leitung 11 eine Verbindung zu einem Saugrohr (nicht dargestellt) herstellt. Über einen Anschluß 12 wird ein Drucksensor 13 einerseits an den Innendruck des Brennstofftanks 1 bzw. der Tankentlüftungsleitung 5 und andererseits über eine Leitung 14 an den Atmosphärendruck angeschlossen. Abweichend von der dargestellten Anordnung kann dieser Drucksensor 13 mit dem Anschluß 12 auch an einer anderen Stelle angeordnet sein, beispielsweise am Tankeinfüllstutzen 2. Der Atmosphärendruck kann durch ein Absperrventil 15 in dieser Leitung 14 zwischen dem Absperrventil 15 und dem Drucksensor 13 eingeschlossen und gespeichert werden und damit der Bezugsdruck des Drucksensors (Atmosphärendruck zu Beginn der Messung) gespeichert. Meßwertfehler durch Atmosphärendruckänderungen, z. B. aufgrund von Höhenänderungen während der Messung, werden dadurch vermieden, wobei das gespeicherte Volumen ausreichend groß dimensioniert ist, um Störeinflüsse auszuschalten, die durch den Absperrvorgang etc. bewirkt werden können. Von einem elektronischen Steuergerät 16 werden über Signalleitungen 17 Eingangssignale eingelesen und verarbeitet sowie Ausgangssignale ausgegeben. Das Ergebnis einer nachfolgende beschriebenen Tankinhaltsberechnung und Dichtheitsdiagnose kann auf einem Display 18 ausgegeben und/oder anderweitig verarbeitet werden, wie später noch angegeben wird.
Der Zylinder 4 befindet sich außerhalb des Brennstofftanks 1 in der Tankentlüftungsleitung 5 zwischen dem Brennstofftank 1 und dem Druckbegrenzungsventil 6 bzw. dem Aktivkohlebehälter 7. Prinzipiell kann jedoch dieser Zylinder 4 in den Tank integriert werden.

Fig. 2 zeigt den Zylinder 4 vergrößert mit einer Membran 19, die mittels eines elektromotorischen Antriebs, bestehend aus einem Elektromotor 20, einem Untersetzungsgetriebe (z. B. Schneckengetriebe) 21 und einem Spindeltrieb 22, bewegt wird.

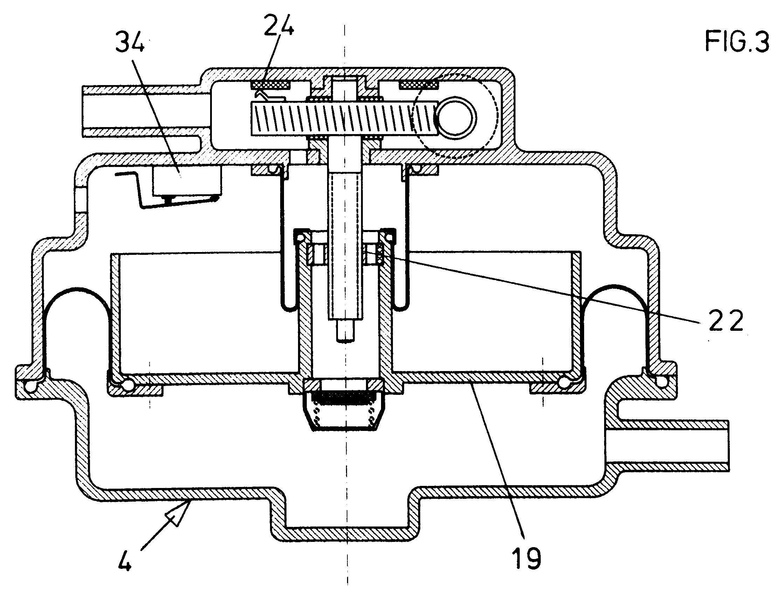

Zur Erlangung der Stellung Meßbereitschaft wird die Membran 19 bis in Nähe der Anschlagstellung in Richtung Verkleinerung eines Membranraumes 23 bewegt. Die Endstellung wird vor dem Erreichen der mechanischen Anschlagstellung durch ein Potentiometer 24 erkannt, welches über ein Untersetzungsgetriebe 25 angetrieben wird und indirekt die Hubstellung der Membran 19 erfaßt. Die Untersetzung zum Antrieb des Potentiometers 24 wird vorzugsweise so gewählt, daß die für einen vollen Hub der Membran 19 erforderlichen Umdrehungen des Spindeltriebes 22 knapp 1 Umdrehung des Potentiometers 24 ergeben. In der Endstellung 'Meßbereitschaft' wird bei dieser Ausführung nach Fig. 2 durch einen Zapfen 27 ein Ventilschließkörper 28 gegen die Kraft einer Druckfeder 29 geöffnet und damit die Tankentlüftungsleitung 5 auf Durchgang geschaltet. Ein Membranraum 30 des Druckbegrenzungsventils 6 (Fig. 1) ist ständig mit der Atmosphäre verbunden. Zur Vermeidung einer zusätzlichen Beaufschlagung des Aktivkohlebehälters 7 mit dem in der Tankentlüftungsleitung 5 befindlichen Brennstoffdampf ist es notwendig, die Volumenverdrängung im Membranraum 23 beim Verfahren der Membran 19 über eine Belüftungsbohrung 31 vorzunehmen und zur Vermeidung von Leckagen zwischen der feststehenden Wand des Membranraumes 23 und der Membran 19 eine formelastische Manschette 32 oder sonstige geeignete Abdichtung vorzusehen (Fig. 2 und 3).

Vor Beginn der Tankinhaltsmessung entsteht bei den Ausführungen nach Fig. 2 und 3 zunächst ein kleiner Leerhub der Membran 19, bis der Kontakt des Zapfens 27 mit dem Ventilschließkörper 28 gelöst und der freie Durchgang am Ventilschließkörper unterbrochen wird. Danach werden gleichzeitig der Tankinnendruck und die Stellung der Membran 19 zu Meßbeginn erfaßt und die Membran 19 in Richtung eines Membranraumes 33 verfahren.

Fig. 3 zeigt den Zylinder 4 mit einer Anordnung des Potentiometers 24 direkt auf dem drehenden Teil des Spindeltriebes 22. Da über den vollen Hub der Membran 19 das Potentiometer mit mehreren Umdrehungen überfahren wird, ist zur Erkennung der Meßbereitschaftsstellung ein Endlagenschalter 34 erforderlich. Ansonsten unterscheidet sich dieser Zylinder 4 nicht von dem Zylinder der Fig. 2.

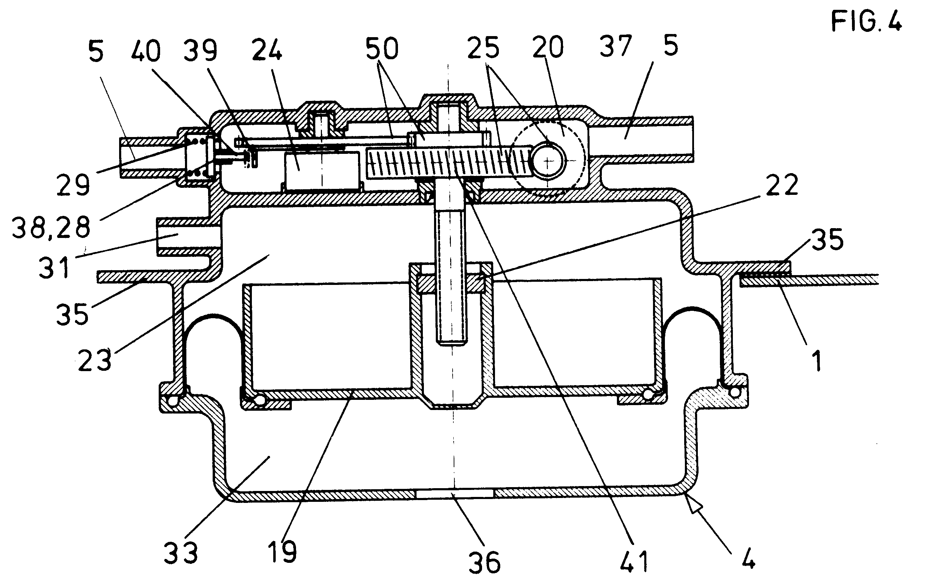

Der in Fig. 4 dargestellte Zylinder 4 ist für den Einbau in den Brennstofftank konzipiert. Der Brennstofftank 1 weist eine Öffnung auf, die durch den Zylinder 4 im Bereich eines Flansches 35 abgedeckt wird. Im Gegensatz zu den Einrichtungen von Fig. 1, 2 bzw. 3 wird der Membranraum 33 nicht mit der Tankentlüftungsleitung 5, sondern mit dem Innenraum des Brennstofftanks 1 über mindestens eine Bohrung 36 verbunden. Die Lage der Bohrung 36 wird vorzugsweise so gewählt, daß ein guter Austausch von flüssigem Brennstoff und der Tankatmosphäre gewährleistet ist. Je nach Anordnung des Zylinders 4 am Brennstofftank 1 und je nach Tankinhalt kann der Membranraum 33 mit flüssigem Brennstoff und/oder mit Luft und Brennstoffdampf gefüllt sein. Die Tankentlüftungsleitung 5 ist bei dieser Ausführung an eine Motor-Getriebekammer 37 angeschlossen. Ein den Ausgang der Kammer absperrendes Absperrventil 38 hat die gleiche Funktion wie der Ventilschließkörper 28 der Fig. 2 und 3, wobei dessen Öffnungsstellung durch einen mechanischen Eingriff der Kontur eines Nockens 39 über einen Abtaststift 40 vorgegeben wird und bei Freigang zwischen dem Nocken 39 und dem Abtaststift 40 durch die Kraft der Druckfeder 29 in Schließstellung gehalten wird. Der Nocken 39 ist mechanisch mit der Welle des Potentiometers 24 verbunden. Die Kontur des Nockens 39 wird so gewählt, daß der Ventilschließkörper 28 beim Erreichen der Membranposition 'Meßbereitschaft' geöffnet ist und vor Beginn des Meßhubes geschlossen wird. Der Membranraum 23 ist über die Belüftungsbohrung 31 mit der Atmosphäre verbunden. Zur Abdichtung der Motor-Getriebekammer 37 gegenüber dem Membranraum 23 dient ein Dichtring 41.

Gegenüber der Vorrichtung mit Zylinder 4 nach Fig. 2 oder 3 hat die Einrichtung nach Fig. 4 insbesondere den Vorteil, daß der Zylinder 4 weitgehend in den Brennstofftank integriert werden kann und kein nennenswerter zusätzlicher Bauraum benötigt wird. Umgekehrt wird beim Volltanken durch die Füllung des Membranraumes 33 mit flüssigem Brennstoff erreicht, daß das Fassungsvermögen des Brennstofftanks praktisch nicht eingeschränkt wird.
Die Membrane 19 befindet sich in der Meßbereitschaftsstellung zur Tankinhaltsmessung. Die Membranstellung für die Meßbereitschaft wird vom elektronischen Steuergerät 16 durch das Potentiometer 24 bzw. den Endlagenschalter 34 (Fig. 1, 2, 3 bzw. Fig. 3) erkannt.

Das Absperrventil 15 ist geöffnet, so daß der Tankinnendruck als Differenzdruck zur Atmosphäre vom Drucksensor 13 gemessen werden kann. Der Atmosphärendruck, die Umgebungstemperatur und ggf. die Brennstofftemperatur werden von Sensoren für das Motormanagementsystem erfaßt (nicht dargestellt) und von diesem an das Steuergerät 16 gemeldet.

Zu Beginn der Messung des Tankinhaltes wird das Absperrventil 15 geschlossen und damit der Bezugsdruck (Atmosphärendruck zu Beginn der Messung) gespeichert. Meßwertfehler durch Atmosphärendruckänderungen, z. B. aufgrund von Höhenänderungen während der Messung, werden dadurch vermieden. Der Elektromotor 20 wird durch ein Ausgangssignal des Steuergerätes 16 in Betrieb gesetzt und treibt die Membran 19 über das Untersetzungsgetriebe 25 in Richtung auf den Membranraum 33 an. Der Membranraum 23 ist über die Belüftungsbohrung 31 mit der Atmosphäre verbunden. Der im Membranraum 33 gespeicherte Brennstoff bzw. Luft und Brennstoffdampf wird über die Bohrung 36 solange in den Tank ausgeschoben, bis ein vorgewählter Anstieg des Tankinnendruckes vom Drucksensor 13 gemeldet wird. Um dynamische Effekte zu vermeiden, kann durch eine Ausbildung der Belüftungsbohrung 31 als Drosselstelle oder eine Drehzahlbegrenzung des Elektromotors 20 der zeitliche Ablauf des Ausschiebens im notwendigen Ausmaß gestreckt werden. Nach dem Erreichen der vorgewählten Druckänderung wird der Elektromotor 20 abgeschaltet und der Hub der Membran 19 über das Potentiometer 24 sowie gleichzeitig der Endwert der Druckänderung am Drucksensor 13 gemessen. Je nach Größe des eingeschlossenen Gasvolumens im Tank und des im Tank herrschenden Absolutdruckes sowie der Tanktemperatur oder einer für diese repräsentativen Größe, die u. U. aus der vom Motormanagement ermittelten Brennstofftemperatur abgeleitet ist, gibt es nach der allgemeinen Zustandsgleichung für ideales Gas einen bestimmten Gradienten für die Änderung von Volumen und Druck. Aus der Berechnung des im Tank eingeschlossenen Gasvolumens kann durch einfache Rechnung der Tankinhalt des Brennstofftanks bestimmt werden, wenn das Gesamtvolumen des Brennstofftanks bekannt ist. Die Messung und Berechnung des Tankinhaltes ist damit abgeschlossen. Das Ergebnis wird über das Display 18 angezeigt und/oder für weitere Berechnungen, z. B. der möglichen Restfahrstrecke für den ermittelten Tankinhalt, herangezogen werden.

Wird die Meßendestellung der Tankinhaltsmessung für einen vorzuwählenden Zeitraum beibehalten, so kann aus der Änderung des Tankinnendruckes, der Temperatur im Brennstofftank und des im Brennstofftank eingeschlossenen Gasvolumens darauf geschlossen werden, ob und in welchem Ausmaß eine Undichtheit des Brennstofftanks besteht. Falls die Undichtheit einen zulässigen Grenzwert übersteigt, kann dies ebenfalls über das Display 18 angezeigt und/oder anderweitig verarbeitet werden, z. B. kann nach einem Tankstopp bei Zündung an diagnostiziert werden, ob der Tankverschlußdeckel 3 wieder ordnungsgemäß aufgeschraubt wurde und damit HC-Emissionen aus dem Tankeinfüllstutzen 2 vermieden werden.

Nach Ablauf der Tankdichtheitsprüfung wird die Membran 19 durch den Elektromotor 20 wieder in die eingangs beschriebene Stellung gebracht, wodurch der Membranraum 33 wieder mit Brennstoff bzw. Luft und Brennstoffdampf gefüllt und Meßbereitschaft erreicht wird.

In Verbindung mit dem Steuergerät 16 kann vorteilhafterweise folgendes Betriebsprogramm für die Tankinhaltsfeststellung abgelegt sein:
1. Meßbereitschaft durch Potentiometerwert oder Endlagenschalter feststellen,
2. Tankinnendruck gegen Atmosphäre feststellen,
3. Schaltventil am Drucksensor schalten,
4. Elektromotor durch Ausgangssignal in Betrieb setzen,
5. Membran- bzw. Potentiometerverstellung ca. 5 % von maximal möglicher Verstellung laufen lassen,
6. Meßzeit 0 und Potentiometer- und Drucksensorwert für Start feststellen,
7. Potentiometer- und Drucksensorwertänderung feststellen,
8. Erreichen des Potentiometer- oder Drucksensorwert-Änderungsendes bzw. eines vorgewählten über Startbetrag liegenden Änderungsbetrages des Potentiometer- oder Drucksensorwerts feststellen,
9. Elektromotor durch Ausgangssignal abschalten,
10. Meßzeit, Potentiometer- und Drucksensorwert feststellen,
11. aktuellen Tankinhalt berechnen, wobei der aktuelle Atmosphärendruck und die Tanktemperatur berücksichtigt werden,
12. Ausgabe eines Ausgangssignals für Tankinhalt an Display oder Weiterverarbeitungsstufen,
13. Schaltventil am Drucksensor zurückschalten und den Elektromotor für Membranrückstellung in Betrieb setzen,
14. Meßbereitschaft durch Potentiometerwert oder Endlagenschalter feststellen (wie zu 1.).

Wie bereits angegeben, kann danach vorgesehen werden, daß der Meßvorgang über eine weitere Zeitspanne aufrecht erhalten wird und die sich ggf. einstellende Tankinnendruckänderung pro Zeiteinheit als Maß für eine Entleerung des Brennstofftanks gewertet wird, die durch flüssige/gasförmige Brennstoffleckage aus Tank und Anschlußleitungen hervorgerufen wird.

Sollte die erfindungsgemäße Vorrichtung jedoch nur für die Tankdichtheitsdiagnose eingesetzt werden, ist vorgesehen, daß die Membranverstellung durch den Elektromotor 20 bis zu einem vorgewählten über Startbetrag liegenden Änderungsbetrag des Potentiometer- oder Drucksensorsignals erfolgt und dann der Elektromotor 20 abgeschaltet wird und die Membranstellung über eine weitere Zeitspanne aufrecht erhalten wird und die sich ggf. einstellende Tankinnendruckänderung pro Zeiteinheit als Maß für eine Entleerung des Brennstofftanks gewertet wird.

Darüber hinaus ist vorteilhafterweise vorgesehen, daß das Maß für die Tankentleerung um den Anteil reduziert wird, der dem im Steuergerät 16 berechneten Brennstoffverbrauch der Brennkraftmaschine entspricht, oder auch, daß der Meßvorgang insgesamt oder nur nach vorliegendem Ausgangssignal für die Anzeige des flüssigen Brennstoffanteils im Tank bei abgestellter Brennkraftmaschine erfolgt. Selbstverständlich kann ein Betriebsprogramm für die Tankdichtheitsdiagnose auch in dem Steuergerät 16 abgelegt sein, wobei im Steuergerät 16 ein zulässiger Wert für den Druckgradienten abgelegt sein kann, ab dem bei Überschreitung ein Fehlersignal ausgegeben wird.

Mit der erfindungsgemäßen Vorrichtung zum Messen des Anteils flüssigen Brennstoffs in einem Brennstofftank liegt eine mit geringem Bauraumbedarf realisierbare Lösung vor, mit der eine beliebige Anordnung des Zylinders 4 bzw. des Membranraumes 33 direkt am Tank 1 über oder unter Brennstoffspiegel möglich geworden ist.
Es versteht sich von selbst, daß der Aktivkohlebehälter 7 und ebenso die für die Maßnahme zur Speicherung des Atmosphärendrucks am Drucksensor 13 notwendigen Bauteile Absperrventil 15 und Speichervolumen entfallen können.

Es besteht jedoch u.U. auch Bedarf nach einer Überprüfung aller brennstoffdampfführenden Leitungen und Behälter auf Dichtheit und der Wirkweise der Aktivkohle-Regenerierung im Rahmen der Borddiagnose.

Hierfür ist nun in Weiterbildung der Erfindung vorgesehen, daß der in die Atmosphäre führende Anschluß 8 des Aktivkohlebehälters 7 ein doppelt-wirkendes Belüftungsventil 42 aufweist, das in Fig. 5 dargestellt ist und mit einem ersten von einer Feder 43 belasteten Schließglied 44 sowie einem innerhalb des ersten Schließgliedes 44 angeordneten, von einer Feder 45 belasteten zweiten Schließglied 46 ausgestattet ist, wobei das erste Schließglied 44 den Anschluß 8 zur Atmosphäre öffnet, wenn im Aktivkohlebehälter 7 Überdruck herrscht, und das zweite Schließglied 46 den Anschluß 8 zur Atmosphäre öffnet, wenn Unterdruck im Aktivkohlebehälter 7 herrscht. Die Tankentlüftungsleitung 5 weist in diesem Falle ein Absperrventil 48 auf.

Der Druck im Tank 1 ist unabhängig vom Druck im Aktivkohlebehälter 7 durch das Druckbegrenzungsventil 6 begrenzt, wobei es erforderlich ist, daß dann ein in der Leitung 5 angeordnetes Bypaßventil 47 geschlossen bleibt.

Mit der erfindungsgemäßen Vorrichtung sind die Funktionen Tankinhalts- und Tankdichtheitsmessungen durchführbar.
Erfindungsgemäß wird nun auch eine Dichtheitsprüfung des Aktivkohlebehältersystems möglich. Für die Dauer dieser Prüfung wird dann das Absperrventil 48 geschlossen. Selbstverständlich ist dann die Anordnung des Drucksensors in der gezeigten Anordnung notwendig, um ein Drucksignal von diesem zu erhalten.
Ohne die Verwendung des Absperrventils 48 ist nur eine Dichtheitsprüfung des Gesamtsystems, bestehend aus dem Brennstofftank und dem Aktivkohlebehältersystem, möglich.

Bei Verwendung des Absperrventils 48 in der Verbindungsleitung zum Tank kann die Dichtheitsprüfung wahlweise auch nur selektiv für das Regenerierungssystem durchgeführt werden, wie noch beschrieben wird.

Im Rahmen einer weiteren Ausgestaltung der Erfindung können in Reihe und/oder parallel zum doppeltwirkenden Belüftungsventil 42 elektromagnetische Absperrventile (nicht dargestellt) eingesetzt werden, um die Abdicht- und Belüftungsfunktion auch über die von den Druckfedern bestimmten Arbeitsdrücke hinaus zu gewährleisten.

Zusätzlich zur Dichtheitsprüfung kann erfindungsgemäß auch eine qualitative und quantitative Prüfung der Flowrate des Regenerier-Taktventils 9 durchgeführt werden. Dazu ist das Meßverfahren in der Weise zu ändern, daß nach der Dichtheitsprüfung (Messung der Druckänderung während einer vorgegebenen Zeit) das Regenerier-Taktventil 9 wieder angesteuert wird und die sich aus den Ansteuerimpulsen und den jeweiligen Betriebsbedingungen einstellenden Durchsätze auf ihre Richtigkeit überprüft werden, in dem aus der Größe des eingeschlossenen Volumens und der Druckabsenkung die Flowrate berechnet und mit der Sollmenge verglichen wird.

Nur im Falle der Dichtheitsprüfung des Aktivkohlebehältersystems und zur Messung der Flowrate des Regenerier-Taktventils 9 ist es erforderlich, das Bypaßventil 47 zu öffnen und das Absperrventil 48 zu schließen.

Die erfindungsgemäße Messung der Dichtheit des gesamten brennstoffdampfführenden Systems und die Überprüfung der Flowrate des Regenerier-Taktventils sind insbesondere für die Erfüllung der Anforderungen einer 'On-Board-Diagnose' geeignet, wie sie künftig in den USA vom Gesetzgeber verlangt wird.

Mit der erfindungsgemäßen Vorrichtung kann eine Dichtheitsprüfung des Tanks und eingeschlossen des Aktivkohlebehältersystems bei verschlossenem Regenerier-Taktventil 9 erfolgen.

Soll das Aktivkohlebehältersystem separat geprüft werden, erfolgt die Messung bei geschlossenem Taktventil 9 und Absperrventil 48, wobei dann auch die erwähnte Funktion des Regenerier-Taktventils 9 überprüft werden kann unter Ansteuerung des Regenerier-Taktventils 9, in dem aus der Größe des eingeschlossenen Volumens und der Druckabsenkung die Flowrate berechnet wird.

Es versteht sich von selbst, daß bei einfacher Ausführung der Vorrichtung das Druckbegrenzungsventil 6 und das Bypassventil 47 entfallen können, und ebenso das Absperrventil 48, sofern auf eine separate Prüfung des Einzelsystems verzichtet wird.

Mit der Einrichtung ohne Druckbegrenzungsventil 6 muß während der Messung das Taktventil 9 geschlossen sein. Zum Beispiel bei einer 2-Minuten-Meßfolge kann dies jedoch einen Zeitanteil von 3 bis 5 % der Betriebszeit ausmachen. Während dieser Zeit findet keine Regeneration des Aktivkohlebehälters 7 statt, was u. U. zu einer unzulässigen Beeinträchtigung der Regenerierung der Aktivkohle führt. Um die Meßfolge (Anzahl der Messungen pro Zeiteinheit) zu vermindern und die Füllstandsmessung trotzdem fortlaufend aktualisieren zu können, wird vorgeschlagen, daß eine Fortschreibung des aktuellen Tankinhaltwertes mittels der im Steuergerät berechneten Einspritzmenge erfolgt. Damit ist es möglich, die Meßfolge für die Füllstandsmessung stark zu reduzieren und/oder nur bei Ausschluß aller kritischen Betriebszustände auszuführen, was zu einer Verringerung des Zeitanteils ohne Regenerierung der Aktivkohle führt.

Bei kritischen Betriebszuständen, z. B. nach Betanken mit frischem Brennstoff bei aufgeheiztem Fahrzeug oder hohem Temperaturanstieg im Tank und/oder voller Beladung der Aktivkohle, ist mit einer erheblichen Ausgasungsmenge leichtflüchtiger Anteile (Benzin, Alkohol) zu rechnen und die Beimengung von dampfförmigem Brennstoff über das Taktventil 9 in die Ansaugluft der Brennkraftmaschine bis zu 30 % der von der Brennkraftmaschine benötigten Brennstoffmenge ausmachen. Um die Lamdaregelung bei sprunghafter Außer- und Infunktionssetzung des Taktventils 9 nicht in unzulässigerweise zu beeinträchtigen, ist durch Verknüpfung der Algorithmen der Füllstands-/Dichtheitsdiagnose und des Motormanagements bzw. der Borddiagnose eine Anpassung der Einspritzmenge vorteilhafterweise durchzuführen. Bei Ab- und Einschalten der Ansteuerung des Taktventils 9 kann die Größe der Einspritzmengenänderung vorteilhaft aus der vor dem Abschalten bestehenden Abweichung der Einspritzmenge zum Normalwert abgeleitet werden.

## Patentansprüche

1. Vorrichtung zum Messen des Anteils von flüssigem Brennstoff in einem Brennstofftank (1), bestehend aus einem Zylinder (4), der durch eine Membran (19) in zwei Membranräume (23, 33) aufgeteilt ist, von denen einer mit dem Tank und der andere mit der Atmosphäre verbunden ist, wobei die Membran (19) beim Messen aus einer definierten Stellung in den mit dem Tank (1) verbundenen Membranraum (23) geschoben wird und die bei gegenüber der Atmosphäre verschlossenem Tank auftretende, von einem Drucksensor (13) gemessene Druckänderung oder eine aus dem Membranverschiebeweg und der Druckänderung abgeleitete Größe als Maß für den Anteil flüssigen Brennstoffs im Tank (1) gewertet wird, dadurch gekennzeichnet, daß die Membran (19) von einem Elektromotor (20) verstellt wird nach Maßgabe von Signalen eines elektronischen Steuergerätes (16), wobei zwischen Motor (20) und Membran (19) ein Untersetzungsgetriebe (21) und ein Spindeltrieb (22) angeordnet sind.

2. Vorrichtung nach Anspruch 1, dadurch gekennzeichnet, daß in Meßbereitschaftsstellung der Membran (19) ein Ventilschließkörper (28) von einem Ventilsitz gehoben wird und so eine Verbindung zwischen zwei Abschnitten einer Tankentlüftungsleitung (5) hergestellt wird.

3. Vorrichtung nach Anspruch 2, dadurch gekennzeichnet, daß der Ventilschließkörper (28) von einem Zapfen (27) des Spindeltriebes (22) betätigt wird und im Membrankörper (19) angeordnet ist, wobei die Verbindung zwischen den Abschnitten der Tankentlüftungsleitung (5) mittels einer Manschette (32) gegenüber dem nicht mit dem Tank (1) verbundenen Membranraum (23) abgedichtet ist.

4. Vorrichtung nach Anspruch 2, dadurch gekennzeichnet, daß der Ventilschließkörper (28) von einem Nocken (39) betätigt wird, der vom Spindeltrieb (22) angetrieben wird und in einer Motor-Getriebekammer (37) angeordnet ist.

5. Vorrichtung nach einem der vorstehenden Ansprüche, dadurch gekennzeichnet, daß die Meßbereitschaftsstellung und der Verstellweg der Membran (19) von einem Potentiometer (24) festgestellt werden, das vom Spindeltrieb (22) derart angetrieben wird, daß der maximale Verstellweg der Membran (19) maximal eine Potentiometerumdrehung ergibt.

6. Vorrichtung nach einem der Ansprüche 1 bis 4, dadurch gekennzeichnet, daß die Meßbereitschaftsstellung von einem Endlagenschalter (34) und der Verstellweg der Membran (19) von einem Potentiometer (24) festgestellt werden, das vom Spindeltrieb (22) derart angetrieben wird, daß der maximale Verstellweg der Membran (19) mehrere Potentiometerdrehungen ergibt.

7. Vorrichtung nach einem der vorstehenden Ansprüche, dadurch gekennzeichnet, daß die Tankentlüftungsleitung (5) über ein Druckbegrenzungsventil (6) über einen nachgeschalteten Aktivkohlebehälter (7) in die Atmosphäre führt.

8. Vorrichtung nach Anspruch 7, dadurch gekennzeichnet, daß der Aktivkohlebehälter (7) einen Anschluß (8) zur Atmosphäre aufweist mit einem doppelt-wirkenden Belüftungsventil (42), das ab einem vorgegebenen über oder unter dem atmosphärischen liegenden Aktivkohlebehälterdruck den Anschluß (8) zur Atmosphäre öffnet.

9. Vorrichtung nach Anspruch 8, dadurch gekennzeichnet, daß in der Tankentlüftungsleitung (5) zum Tank (1) ein Absperrventil (48) angeordnet ist, wobei die Druckänderung durch den in der zum Aktivkohlebehälter (7) führenden Tankentlüftungsleitung (5) angeordneten Drucksensor (13) ermittelt wird.

10. Vorrichtung nach einem der vorstehenden Ansprüche, dadurch gekennzeichnet, daß der Drucksensor (13) über eine Leitung (12) und die Tankentlüftungsleitung (5) an den Tank (1) bzw. direkt am Tankeinfüllstutzen (2) angeschlossen ist und über eine Leitung (14) an die Atmosphäre, wobei in dieser Leitung (14) ein Absperrventil (15) angeordnet ist, mit dem ein zwischen dem Absperrventil (15) und dem Drucksensor (13) bestehende, größenmäßig abgestimmtes Volumen eingeschlossen und gespeichert werden kann.

11. Vorrichtung nach einem der Ansprüche 7 - 10, dadurch gekennzeichnet, daß parallel zum Druckbegrenzungsventil (6) ein Bypaßventil (47) angeordnet ist und einen Bypaßkanal zum Druckbegrenzungsventil (6) steuert.

12. Vorrichtung nach Anspruch 8, dadurch gekennzeichnet, daß in Reihe und/oder parallel zum Belüftungsventil (42) elektromagnetische Absperrventile eingesetzt werden, um Abdicht- und Belüftungsfunktionen auch außerhalb des durch das Belüftungsventil (42) vorgegebenen Druckbereichs zu erreichen.

13. Vorrichtung nach einem der Ansprüche 10 oder 12, dadurch gekennzeichnet, daß im Steuergerät (16) folgendes Betriebsprogramm für die Tankinhaltsfeststellung abgelegt ist:
1. Meßbereitschaft durch Potentiometerwert oder Endlagenschalter feststellen,
2. Tankinnendruck gegen Atmosphäre feststellen,
3. Absperrventil (15) am Drucksensor (13) schalten,
4. Elektromotor (20) durch Ausgangssignal in Betrieb setzen,
5. Membran- bzw. Potentiometerverstellung ca. 5 % von maximal möglicher Verstellung laufen lassen,
6. Meßzeit 0 und Potentiometer- und Drucksensorwert für Start feststellen,
7. Potentiometer- und Drucksensorwertänderung feststellen,
8. Erreichen des Potentiometer- oder Drucksensorwert-Änderungsendes bzw. eines vorgewählten über Startbetrag liegenden Änderungsbetrages des Potentiometer- oder Drucksensorwerts feststellen,
9. Elektromotor (20) durch Ausgangssignal abschalten,
10. Meßzeit, Potentiometer- und Drucksensorwert feststellen,
11. aktuellen Tankinhalt berechnen,
12. Ausgabe eines Ausgangssignals (18) für Tankinhalt an Display (20)oder Weiterverarbeitungsstufen,
13. Absperrventil (15) am Drucksensor (13) zurückschalten und den Elektromotor (20)für Membranrückstellung in Betrieb setzen,
14. Meßbereitschaft durch Potentiometerwert oder Endlagenschalter (34) feststellen wie zu 1.).

14. Vorrichtung nach Anspruch 13, dadurch gekennzeichnet, daß bei der Tankinhaltsberechnung der aktuelle Atmosphärendruck und die Tanktemperatur oder eine für die Tanktemperatur repräsentative Größe berücksichtigt werden.

15. Vorrichtung nach Anspruch 14, dadurch gekennzeichnet, daß die für die Tanktemperatur repräsentative Größe aus der Brennstofflemperatur ermittelt wird, die vom Motormanagementsystem festgestellt wird.

16. Vorrichtung nach einem der vorstehenden Ansprüche, dadurch gekennzeichnet, daß nach vorliegendem Ausgangssignal, das die Anzeige des Anteils flüssigen Brennstoffs im Tank (1) ermöglicht, der Meßvorgang über eine weitere Zeitspanne aufrecht erhalten wird und die sich ggf. einstellende Tankinnendruckänderung pro Zeiteinheit (Druckgradient) als Maß für eine Entleerung des Brennstofftanks (1) gewertet wird, die durch Brennstoffentnahme für die Brennkraftmaschine und flüssige/gasförmige Brennstoffleckage aus Tank und Anschlußleitungen hervorgerufen wird.

17. Vorrichtung nach einem der vorstehenden Ansprüche, dadurch gekennzeichnet, daß die Membranverstellung durch den Elektromotor (20) bis zu einem vorgewählten über Startbetrag liegenden Änderungsbetrag des Potentiometer- oder Drucksensorsignals erfolgt und dann der Elektromotor (20) abgeschaltet wird und die Membranstellung über eine weitere Zeitspanne aufrecht erhalten wird und die sich ggf. einstellende Tankinnendruckänderung pro Zeiteinheit als Maß für eine Entleerung des Brennstofftanks (1) gewertet wird, die durch Brennstoffentnahme für die Brennkraftmaschine und flüssige/gasförmige Brennstoffleckage aus Tank und Anschlußleitungen hervorgerufen wird.

18. Vorrichtung nach Anspruch 16 oder 17, dadurch gekennzeichnet, daß das Maß für die Tankentleerung um den Anteil reduziert wird, der dem im Steuergerät (16) berechneten Brennstoffverbrauch der Brennkraftmaschine entspricht.

19. Vorrichtung nach Anspruch 16, 17 oder 18, dadurch gekennzeichnet, daß das Maß für die Tankentleerung unter Berücksichtigung des Absolutdruckes im Tank, der Tanktemperatur und des Anteils flüssigen Brennstoffs ermittelt wird.

20. Vorrichtung nach Anspruch 16 oder 17, dadurch gekennzeichnet, daß der Meßvorgang insgesamt oder nur nach vorliegendem Ausgangssignal für die Anzeige des flüssigen Brennstoffanteils im Tank bei abgestellter Brennkraftmaschine erfolgt.

21. Vorrichtung nach einem der vorstehenden Ansprüche, 16 - 20, dadurch gekennzeichnet, daß im Steuergerät (16) ein zulässiger Wert für das Maß der Entleerung abgelegt ist, ab dem bei Überschreitung ein Fehlersignal ausgegeben wird.

22. Vorrichtung nach einem der vorstehenden Ansprüche, dadurch gekennzeichnet, daß bei kritischen Betriebszuständen eine Fortschreibung des aktuellen Tankinhaltwertes mittels der im Steuergerät berechneten Einspritzmenge erfolgt und die Meßfolge (Anzahl der Messungen pro Zeiteinheit) verringert wird.

## Claims

1. A device for measuring the content of liquid fuel in a fuel tank (1), comprising a cylinder (4), which is divided by a diaphragm (19) into two diaphragm chambers (23, 33), of which one is connected to the tank and the other to the atmosphere, the diaphragm (19) being pushed during measuring from a defined position into the diaphragm chamber (23) connected to the tank (1), and the pressure change, which is measured by a pressure sensor (13) and occurs when the tank is sealed relative to the atmosphere, or a value derived from the diaphragm displacement path and the pressure change being taken as a measure for the content of liquid fuel in the tank (1), characterised in that the diaphragm (19) is adjusted by an electromotor (20) as a function of signals from an electronic control device (16), reduction gearing (21) and a worm drive (22) being arranged between the motor (20) and the diaphragm (19).

2. A device according to claim 1, characterised in that, when the diaphragm (19) is in the ready-for-measurement position, a valve closing element (28) is lifted by a valve seat, thus forming a connection between two sections of a tank de-aeration line (5).

3. A device according to claim 2, characterised in that the valve closing element (28) is actuated by a journal (27) of the worm drive (22) and is arranged in the diaphragm element (19), the connection between the sections of the tank de-aeration line (5) being sealed by means of a collar (32) relative to the diaphragm chamber (23) not connected to the tank (1).

4. A device according to claim 2, characterised in that the valve closing element (28) is actuated by a cam (39), which is driven by the worm drive (22) and is arranged in a motor-gearing chamber (37).

5. A device according to one of the preceding claims, characterised in that the ready-for-measurement position and the adjustment path of the diaphragm (19) are determined by a potentiometer (24), which is driven by the worm drive (22) in such a manner that the maximum adjustment path of the diaphragm (19) results in one potentiometer revolution at the most.

6. A device according to one of claims 1 to 4, characterised in that the ready-for-measurement position is determined by an end position switch (34) and the adjustment path of the diaphragm (19) is determined by a potentiometer (24), which is driven by the worm drive (22) in such a manner that the maximum adjustment path of the diaphragm (19) results in a plurality of potentiometer revolutions.

7. A device according to one of the preceding claims, characterised in that the tank de-aeration line (5) leads via a pressure limiting valve (6) and a downstream activated carbon receptacle (7) into the atmosphere.

8. A device according to claim 7, characterised in that the activated carbon receptacle (7) comprises a connection (8) leading to the atmosphere with a double-action aeration valve (42), which opens the connection (8) to the atmosphere once a given activated carbon receptacle pressure lying above or below atmospheric pressure is reached.

9. A device according to claim 8, characterised in that a shut-off valve (48) is arranged in the tank de-aeration line (5) leading to the tank (1), the pressure change being detected by the pressure sensor (13) arranged in the tank de-aeration line (5) leading to the activated carbon receptacle (7).

10. A device according to one of the preceding claims, characterised in that the pressure sensor (13) is connected via a line (12) and the tank de-aeration line (5) to the tank (1) or directly to the tank filling socket (2) and is connected via a line (14) to the atmosphere, a shut-off valve (15) being arranged in the said line (14), by means of which shut-off valve a volume existing between the shut-off valve (15) and the pressure sensor (13) and being determined by values can be contained and stored.

11. A device according to one of claims 7 to 10, characterised in that a bypass valve (47) is arranged parallel to the pressure limiting valve (6) and controls a bypass duct leading to the pressure limiting valve (6).

12. A device according to claim 8, characterised in that electromagnetic shut-off valves are arranged in series and/or parallel to the aeration valve (42) in order to also obtain sealing and aerating functions outside the pressure range determined by the aeration valve (42).

13. A device according to one of claims 10 or 12, characterised in that the following operating program for determining the tank content is stored in the control device (16):
1. determine ready-for-measurement state by potentiometer value or end position switch,
2. determine internal tank pressure relative to atmosphere,
3. switch shut-off valve (15) on pressure sensor (13),
4. set electromotor (20) in operation through output signal,
5. allow for diaphragm or potentiometer adjustment by approx. 5% of maximum possible adjustment,
6. determine measurement time 0 and potentiometer and pressure sensor value for start,
7. determine potentiometer and pressure sensor value change,
8. determine when the end of the potentiometer or pressure sensor value change is reached or when the potentiometer or pressure sensor value has changed by a predetermined amount exceeding the initial value,
9. switch off electromotor (20) through output signal,
10. determine measurement time, potentiometer and pressure sensor value,
11. calculate current tank content,
12. issue an output signal (18) for tank content to display (20) or further processing stages,
13. switch back shut-off valve (15) on pressure sensor (13) and set the electromotor (20) in operation for diaphragm restoration,
14. determine ready-for-measurement state by potentiometer value or end position switch (34) as in 1.).

14. A device according to claim 13, characterised in that the current atmospheric pressure and the tank temperature or a value representative of the tank temperature are taken into account for the tank content calculation.

15. A device according to claim 14, characterised in that the values representative of the tank temperature are derived from the fuel temperature determined by the engine management system.

16. A device according to one of the preceding claims, characterised in that, after the production of an output signal which allows for the display of the content of liquid fuel in the tank (1), the measurement procedure is maintained for a further period of time and any occurring internal tank pressure change per unit of time (pressure gradient) is taken as a measure for a drainage of the fuel tank (1) which is brought about by fuel removal for the internal combustion engine and liquid/gaseous fuel leakage from the tank and connecting lines.

17. A device according to one of the preceding claims, characterised in that the diaphragm adjustment is effected by the electromotor (20) until the potentiometer or pressure sensor signal has changed by a predetermined amount exceeding the initial value and the electromotor (20) is then switched off and the diaphragm position is maintained for a further period of time and any occurring internal tank pressure change per unit of time is taken as a measure for a drainage of the fuel tank (1) which is brought about by fuel removal for the internal combustion engine and liquid/gaseous fuel leakage from the tank and connecting lines.

18. A device according to claim 16 or 17, characterised in that the measure for the tank drainage is reduced by the amount corresponding to the fuel consumption of the internal combustion engine calculated in the control device (16).

19. A device according to claim 16, 17 or 18, characterised in that the measure for the tank drainage is determined by taking into account the absolute pressure in the tank, the tank temperature and the liquid fuel content.

20. A device according to claim 16 or 17, characterised in that the measurement procedure is effected in its entirety when the internal combustion engine is switched off or only after the presence of an output signal for the display of the liquid fuel content in the tank.

21. A device according to one of the preceding claims, 16 to 20, characterised in that a permissible value is stored in the control device (16) for the measure of drainage, an error signal being transmitted when this value is exceeded.

22. A device according to one of the preceding claims, characterised in that under critical operating conditions an extrapolation of the current tank content value is effected by means of the injection quantity calculated in the control device and the measurement sequence (number of measurements per unit of time) is reduced.

## Revendications

1. Dispositif pour mesurer la part de combustible liquide dans un réservoir de carburant (1), composé d'un cylindre (4), subdivisé par une membrane (19) en deux compartiments de membrane (23, 33), dont l'un est relié au réservoir et l'autre à l'atmosphère, la membrane (19) étant poussée lors de la mesure, à partir d'une position définie, dans le compartiment de membrane (23) relié au réservoir (1), et la variation de pression, mesurée par un capteur (13) et produite en position de fermeture du réservoir par rapport à l'atmosphère, ou une grandeur déduite de la trajectoire de déplacement de la membrane et de la variation de pression, étant appréciée comme mesure de la part de combustible liquide dans le réservoir (1), caractérisé en ce que la membrane (19) est déplacée par un moteur électrique (20) en fonction des signaux d'un appareil de commande électronique (16), un démultiplicateur (21) et une commande à vis sans fin (22) étant disposés entre le moteur (20) et la membrane (19).

2. Dispositif suivant la revendication 1, caractérisé en ce qu'un corps de fermeture de soupape (28) est décollé d'un siège de soupape en position d'attente de mesure de la membrane (19), une jonction étant ainsi créée entre deux sections d'une conduite d'aération (5) du réservoir.

3. Dispositif suivant la revendication 2, caractérisé en ce que le corps de fermeture de soupape (28) est actionné par un tourillon (27) de la commande à vis sans fin (22) et est disposé dans le corps de membrane (19), la jonction entre les sections de la conduite d'aération (5) du réservoir étant étanchéifiée par une manchette (32) par rapport au compartiment de membrane (23), non relié au réservoir (1).

4. Dispositif suivant la revendication 2, caractérisé en ce que le corps de fermeture de soupape (28) est actionné par une came (39), entraînée par la commande à vis sans fin (22) et disposée dans une chambre de transmission (37) du moteur.

5. Dispositif suivant l'une quelconque des revendications précédentes, caractérisé en ce que la position d'attente de mesure et la trajectoire de déplacement de la membrane (19) sont établies par un potentiomètre (24), entraîné par la commande à vis sans fin (22), de sorte que la trajectoire maximale de la membrane (19) débouche au maximum sur une rotation du potentiomètre.

6. Dispositif suivant l'une quelconque des revendications 1 à 4, caractérisé en ce que la position d'attente de mesure est déterminée par un interrupteur fin de course (34), la trajectoire de déplacement de la membrane (19) étant établie par un potentiomètre (24) entraîné par la commande à vis sans fin (22), de sorte que la trajectoire maximale de la membrane (19) débouche sur plusieurs rotations du potentiomètre.

7. Dispositif suivant l'une quelconque des revendications précédentes, caractérisé en ce que la conduite d'aération (5) du réservoir mène à l'atmosphère par l'intermédiaire d'un limiteur de pression (6) et d'un réservoir aval de charbon actif (7).

8. Dispositif suivant la revendication 7, caractérisé en ce que le réservoir de charbon actif (7) présente un raccordement (8) à l'atmosphère avec une soupape d'aération (42) à double effet, qui ouvre à l'atmosphère le raccord (8) à partir d'une pression prédéfinie dans le réservoir de charbon actif, supérieure ou inférieure à la pression atmosphérique.

9. Dispositif suivant la revendication 8, caractérisé en ce qu'une soupape d'arrêt (48) est montée dans la conduite d'aération (5) du réservoir (1), la variation de pression étant déterminée par le capteur (13), disposé dans la conduite d'aération (5) menant au réservoir de charbon actif (7).

10. Dispositif suivant l'une quelconque des revendications précédentes, caractérisé en ce que le capteur de pression (13) est relié par une conduite (12) et par la conduite d'aération (5) au réservoir (1) et/ou directement à la tubulure de remplissage du réservoir (2), et par une conduite (14) à l'atmosphère, une soupape d'arrêt (15), disposée dans cette conduite (14), permettant de renfermer et d'accumuler un volume d'une valeur adaptée, contenu entre la soupape d'arrêt (15) et le capteur de pression (13).

11. Dispositif suivant l'une quelconque des revendications 7 à 10, caractérisé en ce qu'une soupape de dérivation (47), montée à la parallèle du limiteur de pression (6), contrôle un conduit de bipasse menant au limiteur (6).

12. Dispositif suivant la revendication 8, caractérisé en ce que des soupapes d'arrêt électromagnétiques sont montées en série et/ou en parallèle de la soupape d'aération (42), en vue d'obtenir des fonctions d'étanchéité et d'aération, à l'extérieur du domaine de pression prédéfini par la soupape d'aération (42) également.

13. Dispositif suivant l'une quelconque des revendications 10 ou 12, caractérisé en ce que le programme d'exploitation suivant est consigné dans l'appareil de commande (16) pour établir le contenu du réservoir:
1. Détermination de l'attente de mesure par la valeur du potentiomètre ou l'interrupteur fin de course.
2. Détermination de la pression interne du réservoir par rapport à l'atmosphère.
3. Commutation de la soupape d'arrêt (15) sur le capteur de pression (13).
4. Mise en marche du moteur électrique (20) par le signal de sortie.
5. Déplacement de la membrane et/ou du potentiomètre de 5% environ du déplacement maximal possible.
6. Détermination du temps de mesure 0 et de la valeur du potentiomètre et du capteur de pression pour le départ.
7. Détermination de la variation des valeurs du potentiomètre et du capteur de pression.
8. Détermination de la fin de variation de la valeur du potentiomètre ou du capteur de pression et/ou d'une valeur présélectionnée de variation de la valeur du potentiomètre ou du capteur de pression, supérieure à la valeur de départ.
9. Déconnexion du moteur électrique (20) par le signal de sortie.
10. Détermination du temps de mesure, de la valeur du potentiomètre et du capteur de pression.
11. Calcul du contenu actuel du réservoir.
12. Affichage d'un signal de sortie (18) pour le contenu du réservoir sur un visuel (20) ou des étages de traitement ultérieur.
13. Commutation en retour de la soupape d'arrêt (15) sur le capteur de pression (13), et mise en marche du moteur électrique (20) pour le retour de la membrane.
14. Détermination de l'attente de mesure par la valeur du potentiomètre ou l'interrupteur fin de course (34), comme au point 1.

14. Dispositif suivant la revendication 13, caractérisé en ce que la pression atmosphérique actuelle et la température du réservoir, ou une grandeur représentative de la température du réservoir, sont prises en compte dans le calcul du contenu de ce dernier.

15. Dispositif suivant la revendication 14, caractérisé en ce que la grandeur, représentative de la température du réservoir, est déterminée à partir de la température du combustible, établie par le système de management du moteur.

16. Dispositif suivant l'une quelconque des revendications précédentes, caractérisé en ce que, en présence du signal de sortie permettant d'afficher la part de combustible liquide dans le réservoir (1), l'opération de mesure est maintenue sur un autre intervalle de temps, et la variation de pression interne dans le réservoir par unité de temps (gradient de pression), éventuellement établie, est appréciée comme mesure d'une vidange du réservoir de carburant (1), provoquée par la reprise de combustible pour le moteur à combustion interne et par des fuites de combustible liquide/gazeux du réservoir et des conduites de raccordement.

17. Dispositif suivant l'une quelconque des revendications précédentes, caractérisé en ce que le déplacement de la membrane par le moteur électrique (20) est assuré jusqu'à une valeur de variation présélectionnée du signal du potentiomètre ou du capteur de pression, supérieure à la valeur de départ, le moteur électrique (20) est ensuite déconnecté, la position de la membrane est maintenue sur un autre intervalle de temps, et la variation de pression par unité de temps dans le réservoir, éventuellement établie, est appréciée comme mesure de la vidange du réservoir de carburant (1), provoquée par la reprise de combustible pour le moteur à combustion interne et par des fuites de combustible liquide/gazeux du réservoir et des conduites de raccordement.

18. Dispositif suivant l'une des revendications 16 ou 17, caractérisé en ce que la mesure de la vidange du réservoir est réduite de la part, correspondante à la consommation de combustible du moteur à combustion interne, calculée dans l'appareil de commande (16).

19. Dispositif suivant l'une des revendications 16, 17 ou 18, caractérisé en ce que la mesure de la vidange du réservoir est déterminée compte tenu de la pression absolue dans le réservoir, de la température de ce dernier et de la part de combustible liquide.

20. Dispositif suivant la revendication 16 ou 17, caractérisé en ce que l'opération de mesure est assurée dans son ensemble, ou seulement en présence du signal de sortie pour l'affichage de la part de combustible liquide dans le réservoir, à l'arrêt du moteur à combustion interne.

21. Dispositif suivant l'une quelconque des revendications précédentes 16 à 20, caractérisé en ce qu'une valeur admissible est consignée dans l'appareil de commande (16) pour la mesure de la vidange, un signal d'erreur étant émis en cas de dépassement par le haut de cette valeur.

22. Dispositif suivant l'une quelconque des revendications précédentes, caractérisé en ce qu'une mise à jour de la valeur actuelle du contenu du réservoir est assurée en cas de régimes critiques, au moyen de la quantité injectée calculée dans l'appareil de commande, la série de mesures (nombre de mesures par unité de temps) étant alors réduite.
